# FASCICULE DE BREVET EUROPEEN

(11) **EP 0 430 824 B1**
(45) Date de publication et mention de la délivrance du brevet: **03.03.1993**
(21) Numéro de dépôt: 90420491.4
(22) Date de dépôt: 15.11.1990
(51) Int. Cl.: A63C 5/12, B29C 67/22

(54) **Procédé pour la fabrication d'une structure moulée complexe, et notamment d'un ski, et structure moulée complexe ainsi obtenue**
Verfahren zur Herstellung einer geformten komplexen Struktur, insbesondere Ski und so erhältliche geformte komplexe Struktur
Method of producing a complex moulded structure, in particular ski and complex moulded structure so obtained

(30) Priorité: 23.11.1989 FR 8915673
(43) Date de publication de la demande: 05.06.1991
(73) Titulaire: SKIS ROSSIGNOL S.A., F-38509 Voiron Cédex (FR)
(72) Inventeur: Perenon, Jacques, F-38500 Voiron (FR); Pichon, Maurice, F-38140 La Murette (FR); Deborde, Henri-Charles, F-38850 Bilieu-Charavines (FR); Jodelet, François, F-38500 Voiron (FR)
(74) Mandataire: Laurent, Michel

(56) Documents cités:
- EP-A- 0 047 038
- DE-A- 1 806 433
- FR-A- 2 553 669
- PATENT ABSTRACTS OF JAPAN, vol. 8, no. 274 (M-345)[1711], 14 décembre 1984,page 122 M 345; & JP-A-59 145 125 (MINORU SANGYO K.K.) 20-08-1984

## Description

L'invention concerne un procédé pour la fabrication d'une structure moulée complexe. Elle se rapporte également aux structures moulées complexes ainsi obtenues.

Par "structure moulée complexe", on entend une structure moulée contenant :
- des éléments, notamment de rigidification et/ou de renfort, se présentant soit sous forme de fils soit sous forme de nappes, voire sous forme de plaques ;
- des éléments de protection ;
- des éléments mécaniques divers, tels que par exemple d'ammortissement, d'allègement ...
- éventuellement, des éléments de décoration.

Il existe plusieurs procédés industriels aptes à réaliser l'assemblage de ces structures. On peut citer :
- le procédé dit "par voie humide", décrit par exemple dans le document FR-A-1 124 600, correspondant à un empillement d'éléments fraîchement encollés, qui se révèle toutefois long à mettre en oeuvre, difficilement automatisable, et nécessitant en outre des précautions d'utilisation;
- le procédé de collage "par voie sèche" utilisant des éléments pré-imprégnés ou des films secs ; ce procédé se révèle plus facilement automatisable et surtout moins salissant ; toutefois ce procédé s'avère difficile d'utilisation, compte tenu des conditions très strictes de mise en oeuvre inhérentes à la pégosité spécifique des pré-imprégnés. De plus, il est difficile d'obtenir par le procédé dit "par voie sèche" des collages "plan sur plan" dont le joint de colle soit exempt de microbulles ayant tendance à affaiblir la structure obtenue ;
- le procédé d'assemblage par injection in situ de résine (expansive ou non), décrit par exemple dans le document FR-A-2 130 758 .

Quel que soit le procédé industriel utilisé, il est facile de réaliser des structures dites "sandwich" en section de forme rectangulaire. Les éléments constitutifs d'une telle structure se positionnent aisément soit par empilage, soit par appui sur des supports réalisés à cet effet.

En revanche, lorsque l'on désire réaliser des formes plus complexes, non planes, ou présentant des variations de forme le long de la ligne du produit considéré, plusieurs solutions sont connues à ce jour.

Tout d'abord, l'utilisation de coques en forme, dans lesquelles sont disposés les différents éléments pré-encollés, ou dans lesquelles sont injectées les résines. Ce procédé se révèle coûteux compte tenu des opérations supplémentaires de réalisation de la coque.

Il est également connu d'utiliser soit la pression provoquée par l'expansion du polyuréthanne (voir par exemple US-A-4 590 023 ou FR-A-2 553 669), soit la pression de l'air à l'intérieur de tubes gonflables (voir par exemple le document CH-A-369 894) pour obtenir un placage des éléments-enveloppe contre les parois intérieures du moule en forme. Toutefois, dans le premier cas, il est nécessaire de ménager un espace libre dans le moule, par exemple au moyen d'entretoises, ledit espace destiné à être comblé par la mousse de polyuréthanne expansée, d'où une complexité accrue dans l'agencement des moules. De plus, les éléments-enveloppes peuvent, comme déjà dit, être pré-imprégnés d'une résine, susceptible d'interréagir avec le polyuréthanne, et donc d'altérer les propriétés recherchées de la structure obtenue. Enfin, dans certains cas, la mousse de polyuréthanne a un rôle de collage entre les éléments-enveloppes inférieurs et supérieurs des structures. On a constaté que ce collage restait toutefois d'efficacité limitée, et ne pouvait être utilisé que pour certaines applications.

Le second cas, à savoir l'utilisation d'air injecté dans des sacs, est surtout utilisé dans le but d'alléger la structure. On obtient de ce fait des objets alvéolaires creux sans noyau, dont la tenue, et la rigidité sont parfois incompatibles avec certaines applications de telles structures.

Enfin, il est toujours possible d'obtenir des formes particulières par usinage. Cet usinage consomme de la matière, s'avère coûteux compte tenu de cette opération supplémentaire, et ne permet pas d'obtenir toutes les structures désirées. Qui plus est, il peut affecter l'unité et la continuité de la structure et donc les propriétés physiques afférantes. De plus, la réalisation d'un décor est rendue plus difficile, car ce procédé interdit la possibilité d'un pré-décor à plat.

La présente invention vise à pallier ces inconvénients. Elle propose un procédé pour la fabrication d'une structure moulée susceptible de présenter une section variable le long de l'axe longitudinal de la structure, qui soit facile à mettre en oeuvre, peu coûteux et permettant de maitriser les propriétés mécaniques et physiques de la structure obtenue.

Ce procédé pour la fabrication d'une structure moulée complexe, constituée par un noyau de mousse en matière plastique, armé sur sa périphérie par un ensemble de deux demi-enveloppes, respectivement supérieure et inférieure, composées d'éléments de renfort, de protection, d'amortissement, de décor ou autres, consiste :
- à déposer dans un moule un premier sous-ensemble, destiné à former la première demi-enveloppe ;
- à déposer dans ce même moule un second sous-ensemble, destiné à former la seconde demi-enveloppe ;
- à fermer le moule ;
- puis, à injecter entre ces deux sous-ensembles des réactifs destinés à réagir pour former une mousse qui s'expanse in situ, jusqu'à venir plaquer chacun des sous-ensembles contre les parois du moule ;
- puis, à refroidir le contenu du moule ;
- et enfin, à ouvrir le moule pour retirer la structure moulée complexe obtenue.

Le procédé conforme à l'invention se caractérisé en ce que, lors de l'empilage du premier et du second sous-ensembles dans le moule, deux membranes souples en matière plastique sont intercalées entre la demi-enveloppe supérieure et la demi-enveloppe inférieure, lesdites membranes, lors de la fermeture du moule, définissant une gaine dans laquelle on injecte les réactifs de la mousse.

Cette opération constitue de fait l'opération unique du moulage de la structure moulée.

En d'autres termes, la présente invention consiste à ce que, partant d'éléments standards, et utilisant des membranes en un matériau approprié, il est possible de réaliser des structures complexes moulées de section variable le long de l'axe longitudinal des dites structures et ce, en jouant sur l'élasticité, la souplesse, la géométrie de certains éléments, ainsi que sur l'expansion de la mousse. Il est à noter que la substitution du placage par l'injection d'air dans des boudins, par l'expansion de mousse, notamment de polyuréthanne ne s'imposait pas à l'évidence, à preuve, d'une part le long délai qui s'est écoulé depuis la connaissance du premier procédé (air), et d'autre part et surtout, le fait que, conformément à l'invention, il est indispensable que les membranes présentent sur une face de bonnes propriétés d'adhérence avec la mousse et sur l'autre face de bonnes propriétés d'adhérence avec la résine époxyde de pré-imprégnation, afin notamment de garantir la résistance au délaminage et aux cisaillements des différents empilements, tels que les demi-enveloppes, à la fois sur la mousse constituant le noyau de la structure et sur le stratifié des deux demi-enveloppes constituant le renfort de la structure.

Avantageusement, en pratique :
- les membranes combinent dans les conditions du moulage une bonne résistance à la déchirure et une bonne tenue en température. En effet, pour faciliter la déformation des demi-enveloppes, il peut être nécessaire de porter la température du moule à 180 °C ;
- les deux demi-enveloppes et les membranes sont superposées à plat dans le moule, ou en appui contre la paroi interne inférieure du moule avant fermeture de celui-ci et injection des composants de la mousse ;
- les membranes sont étanches aux produits générés lors de l'expansion de la mousse, ainsi qu aux différentes résines présentes à l'état fondu lors des conditions de réalisation de la structure moulée complexe. En effet, il est recommandé de prévenir toute mixtion des deux résines, à savoir la résine d'imprégnation des éléments constitutifs des demi-enveloppes, lorsque c'est le cas, et la mousse de polyuréthanne. De manière complémentaire, les membranes constituent un intermédiaire de collage dans les conditions d'utilisation. De fait, cette caractéristique permet lors d'une opération de moulage d'une structure, la mise en oeuvre simultanément, tout en les isolant, de deux composants chimiquement différents, qui, s'ils étaient au contact l'un de l'autre pendant la phase de moulage,soit réagiraient parasitairement,soit seraient incompatibles l'un avec l'autre. Il résulte donc de la présente invention la possibilité d'une mise en oeuvre simultanée de deux composants chimiquement différents, procurant, outre un avantage sur le plan technologique, des qualités de structures interessantes ;
- les membranes sont choisies de telle sorte que la mousse injectée adhère à leur paroi interne, et que les résines de pré-imprégnation des demi-enveloppes adhèrent également à leur paroi extérne, constituant ainsi l'intermédiaire de collage entre la mousse et la résine d'imprégnation des demi-enveloppes ;
- les membranes sont réalisées en un matériau visco-élastique amortissant, constituant ainsi un film amortissant entourant le noyau de mousse de la structure ;
- les membranes sont réalisées en un matériau choisi dans le groupe constitué par les polyuréthannes thermoplastiques, les polyethers block-amides, les polyethers block-amides modifiés nitrile ;
- les membranes font partie intégrante des demi-enveloppes et sont rapportées sur celles-ci ;
- les membranes sont de structure complexe, constituée d'au moins deux couches superposées de matériaux, respectivement, une couche interne, compatible avec la résine constituant le noyau de mousse expansée, et une couche externe, compatible avec la résine utilisée dans l'empilement des demi-enveloppes inférieure et/ou supérieure, l'une au moins de ces deux couches assurant la jonction adhésive entre les deux couches, et l'étanchéité globale desdites membranes ; toutefois ce rôle peut être assuré par un film de colle appropriée ou tout autre moyen ;
- les deux membranes sont constituées par une seule gaine tubulaire étirable au moins dans le plan de sa section ;
- la gaine tubulaire étirable est réalisée, après extrusion, par repliage et soudure d'un film plat, d'épaisseur constante ou variable ;
- le film est une colle thermofusible ;
- chacune des deux demi-enveloppes est constituée d'un empilement comportant au moins une couche de renfort ;
- certains des éléments constitutifs de l'empilement sont imprégnés d'une résine adhésive ;
- les deux demi-enveloppes sont préformées partiellement ou totalement avant leur introduction dans le moule, en fonction de la forme définitive qu'elles sont supposées adopter ;
- l'empreinte du moule a une section complexe qui ménage au niveau du plan de joint un intervalle destiné à recevoir partie des deux demi-enveloppes, dont l'entrefer est au plus égal à la somme des épaisseurs des deux demi-enveloppes dans les conditions d'injection des réactifs destinés à former la mousse, pour permettre lors de l'expansion de la mousse, le glissement des bords latéraux des demi-enveloppes dans l'entrefer, et pour leur permettre de venir se plaquer, au fur et à mesure, contre les parois du moule ;
- la structure complexe moulée a la forme d'une poutre et l'injection des réactifs dans la gaine tubulaire s'effectue à proximité de l'une des extrémités de la poutre ;
- les extrémités latérales de la demi-enveloppe supérieure sont repliées vers l'intérieur au niveau de la base des parois latérales du moule lors de sa mise en place avant fermeture du moule, l'expansion de la mousse provoquant leur dépliage et simultanément leur placage contre les dites parois latérales du moule . Ce mode de réalisation supprime le pincement des deux demi-enveloppes dans l'entrefer du moule et donc l'opération d'ébarbage sur la structure issue du moule.

La présente invention concerne également un procédé, se basant sur le procédé précédent, pour la fabrication d'un ski moulé constitué d'une structure moulée complexe. Ce procédé se caractérisé en ce qu'il consiste :
- tout d'abord, à déposer sur le fond d'un moule un premier ensemble comprenant une semelle de glisse dont les bords latéraux comportent les carres, un élément de rigidification pré-encollé et une nappe textile de renfort pré-imprégnée d'une résine thermodurcissable ;
- puis à déposer sur ce premier ensemble, une gaine tubulaire aplatie, en matière plastique étirable dans au moins le plan de sa section, apte à adhérer à la fois à la mousse du noyau et à la résine de pré-imprégnation ;
- puis à déposer au dessus de cette gaine tubulaire étirable un second ensemble comprenant une nappe textile pré-imprégnée, un élément de rigidification pré-encollé, et une plaque thermoplastique décorée transparente ;
- à fermer le moule ;
- puis à injecter à l'intérieur de la gaine tubulaire par l'une de ses extrémités les réactifs de la mousse ;
- et enfin, après la durée de polymérisation adéquate, à refroidir le contenu du moule et ouvrir ce moule pour retirer le ski ainsi obtenu.

Avantageusement, en pratique :
- l'empreinte du moule a une section pratiquement trapézoïdale, rectangulaire, carré, elliptique, circulaire, ou plus complexe ;
- après démoulage, on coupe les parois latérales situées au niveau du plan de joint ;
- les chants sont inclinés ;
- les deux chants inclinés et la face supérieure sont renforcés de manière continue par le même élément textile de renfort ;
- l'injection des réactifs de la mousse s'effectue par la spatule ;
- l'injection des réactifs de la mousse s'effectue par la section tronquée de la spatule ;
- l'injection des réactifs de la mousse à l'intérieur de la gaine s'effectue par le biais d'un canal s'étendant entre un orifice cheminant le long de la spatule jusqu'au point d'infléchissement de la spatule par rapport au reste du ski, ledit canal étant défini par un insert de forme appropriée, positionné dans le moule entre les deux demi-enveloppes, et présentant des découpes destinées à permettre la fixation de la gaine, afin d'obtenir une injection correcte des réactifs dans celle-ci;
- l'injection des réactifs constitutifs de la mousse s'effectue par le talon .

Enfin la présente invention concerne également les skis obtenus selon le procédé ci-dessus décrit. Ces skis se caractérisent en ce qu'ils comprennent, entre les deux demi-enveloppes, une gaine visco-élastique entourant le noyau, adhérant à ce dernier et aux deux demi-enveloppes, autorisant ainsi le cisaillement élastique respectif des demi-enveloppes sur le noyau.

La manière dont l'invention peut être réalisée et les avantages qui en découlent ressortiront mieux de l'exemple de réalisation qui suit, donné à titre indicatif et non limitatif, à l'appui des figures annexées.

La figure 1 représente une coupe transversale du moule préalablement à l'injection des réactifs constitutifs de la mousse.

La figure 2 est une coupe transversale du moule après expansion de la mousse.

La figure 3 représente une coupe similaire à celle de la figure 1 dans le cadre d'une autre forme de réalisation.

La figure 4 est une coupe similaire à celle de la figure 2 dans le cadre de la même forme de réalisation que celle de la figure 3.

La figure 5 est une coupe transversale du moule avec les différents éléments entrant dans la composition d'une structure moulée de ski conforme à l'invention, préalablement à l'injection des réactifs constitutifs de la mousse.

La figure 6 représente une coupe transversale du moule précédent après expansion de la mousse.

La figure 7 est une coupe transversale d'un moule selon une autre forme de réalisation de l'invention avant injection des réactifs constitutifs de la mousse.

La figure 8 est une coupe transversale du moule de la figure 7 obtenue selon cette autre forme de réalisation, après expansion de la mousse.

La figure 9 est une représentation schématique de l'insert destiné à permettre l'injection des réactifs par la spatule d'un ski, lors de sa réalisation.

La figure 10 est une coupe longitudinale selon la ligne I - I de l'insert de la figure 9.

La figure 11 est une coupe longitudinale dans le plan de la zone antérieure d'un ski, muni de l'insert de la figure 9.

La figure 12 est une représentation schématique de l'insert destiné à permettre l'injection des réactifs par une extrémité tronquée d'un ski.

La figure 13 est une coupe longitudinale dans le plan de l'insert de la figure 12.

Le premier exemple qui va être décrit concerne la fabrication d'une structure moulée complexe, qui pourrait être utilisée dans le cadre de la fabrication de planches à voile, ski nautique, etc. , sans se départir de la portée de la présente invention.

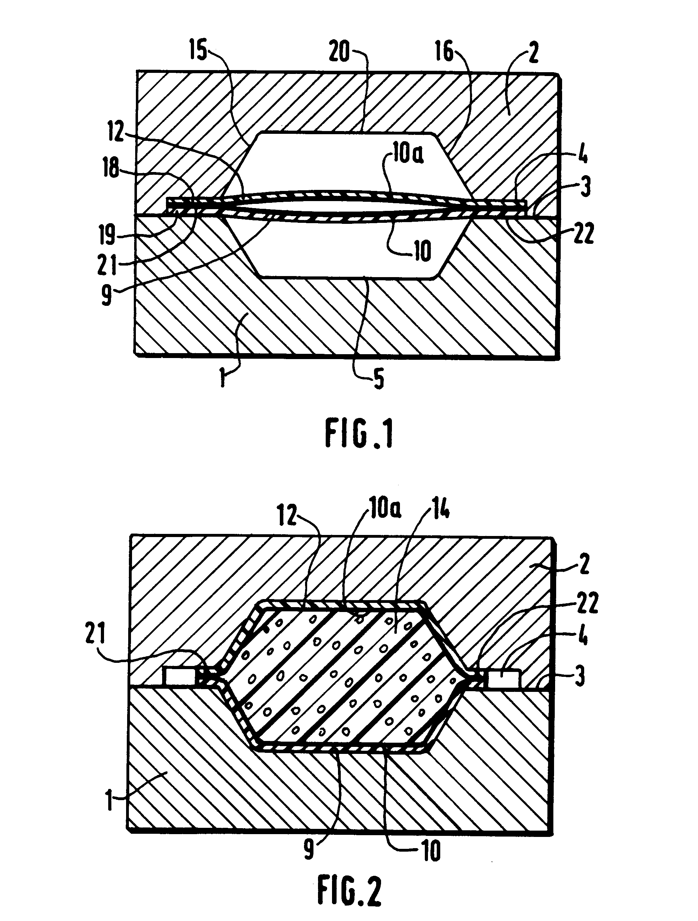

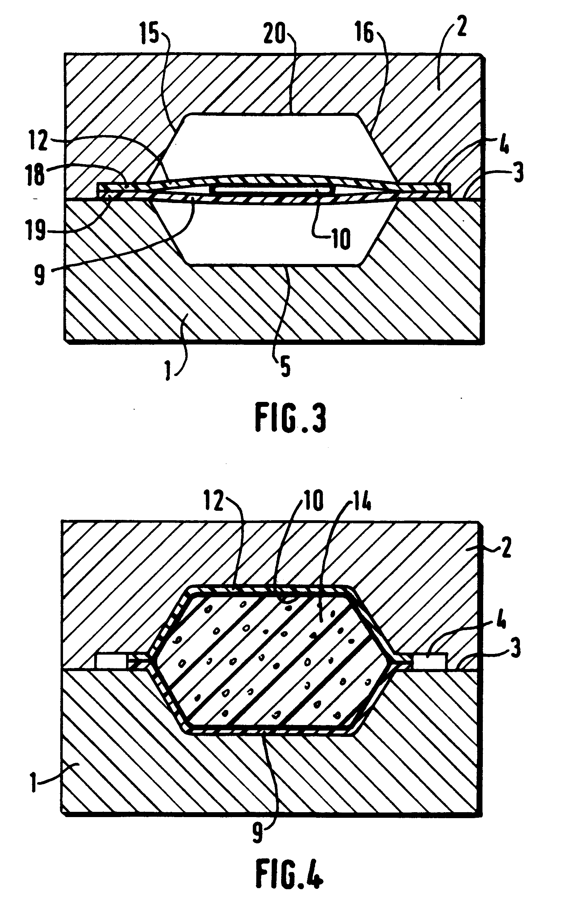

Selon l'invention, et comme on peut le voir sur les figures 1 et 2, on dépose au niveau du plan de joint (3) d'un moule défini par ses empreintes supérieure (2) et inférieure (1), un premier sous-ensemble ou demi-enveloppe (9). De manière plus précise, cette demi-enveloppe (9) repose au niveau du plan de joint (3) par l'intermédiaire de ses extrémités latérales (19). Cette première demi-enveloppe peut avantageusement être constituée d'une nappe textile pré-imprégnée d'une résine thermodurcissable, par exemple époxyde.

Puis on dépose sur cette demi-enveloppe inférieure (9) deux membranes souples (10,10a), réalisées en matière plastique. Les deux extrémités latérales (21,22) de ces membranes sont pincées pratiquement au niveau du plan de joint (3) du moule.

On dépose alors par dessus ces membranes, une seconde demi-enveloppe, supérieure (12), de même nature que la première. De la sorte, on obtient un empilement, dont les extrémités latérales sont insérées dans un entrefer (4) ménagé au voisinage immédiat du plan de joint.

Il est à noter que dans cet exemple les deux demi-enveloppes, respectivement inférieure (9) et supérieure (12) sont semi-rigides à froid, et sont susceptibles d'être déformées à chaud. Néanmoins, il est tout à fait concevable, dans le cadre de l'invention, de prévoir des demi-enveloppes préformées partiellement, voire totalement, seules les membranes (10,10a) se trouvent alors pincées au niveau du plan de joint lors de la fermeture du moule. Dans un autre mode de réalisation, les membranes (10,10a) peuvent faire partie intégrante des demi-enveloppes respectivement inférieure (9) et supérieure (12). Dans ce cas, elles sont fixées sur la face interne desdites demi-enveloppes par tout moyen approprié, et notamment par collage.

Compte tenu de leur pincement au niveau de l'entrefer (4) du moule, les membranes (10,10a) définissent une gaine étanche à l'intérieur du moule.

Le moule est alors refermé et chauffé. Il est ensuite procédé à l'injection des constituants de la mousse de polyuréthanne, à savoir isocyanate et polyol,à l'intérieur de la gaine ainsi constituée (10,10a). De manière connue, ces composants réagissent et s'expansent in situ, provoquant le placage des deux demi-enveloppes (9,12), rendues souples et déformables sous l'effet de la température, respectivement sur le fond (5) et contre la paroi supérieure (20) du moule. Corrélativement, il y a légère rétraction des bords latéraux (18,19) des demi-enveloppes et (21,22) des membranes (10,10a). De plus, il y a adhérence des résines de pré-imprégnation des demi-enveloppes (9,12) sur la paroi externe des membranes (10, 10a), et adhérence de la mousse (14) sur la paroi interne des mêmes membranes (10,10a), sans pour autant que ces deux résines n'entrent en contact, compte tenu de l'étanchéité des membranes. Ces dernières sont avantageusement réalisées en polyether blocks-amides. Néanmoins, elles peuvent être pluri-matériaux, et sont alors constituées, par exemple, de trois couches superposées :
- une couche interne, compatible avec le noyau de mousse de polyuréthanne (14) ;
- une couche externe compatible avec les résines d'imprégnation des demi-enveloppes supérieure (12) et inférieure (9) ;
- une couche intermédiaire, apte à assurer la jonction et l'adhérence entre les deux premières couches, et en outre, apte à assurer l'étanchéité de la membrane résultante .

On a représenté dans la figure 2 l'aspect du moule après expansion de la mousse de polyuréthanne.

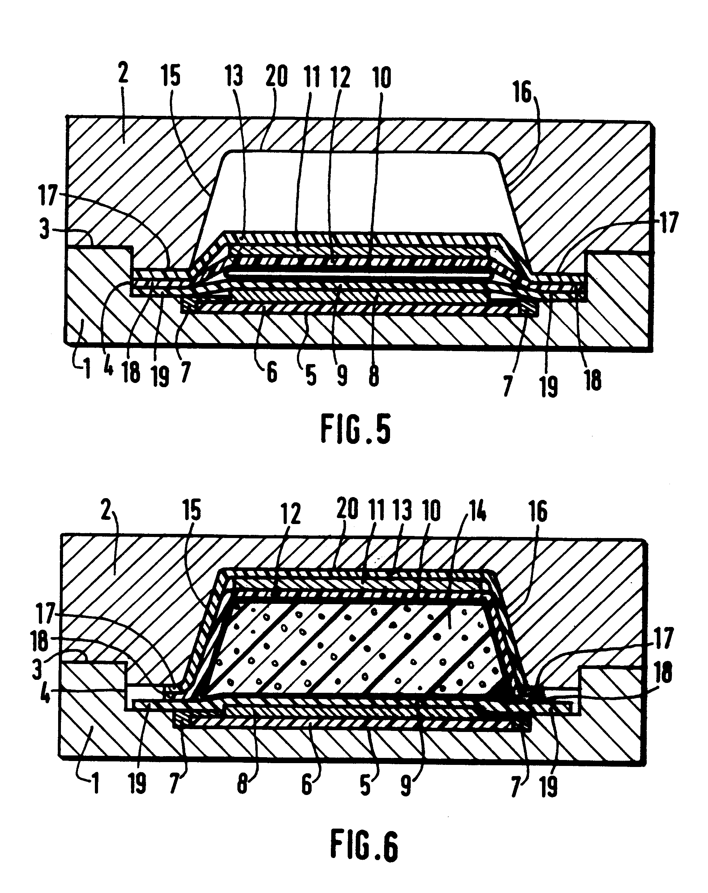

Dans une autre forme de réalisation représentée dans les figures 3 et 4, les membranes (10,10a) sont remplacées par une gaine tubulaire étirable (10). On dépose tout d'abord à plat, au niveau du plan de joint (3) du moule (1,2) une première demi-enveloppe (9). Puis on dépose sur cette première demi-enveloppe (9) ladite gaine tubulaire (10), réalisée en matière plastique étirable. Comme on peut le constater, cette gaine tubulaire (10), ne s'étend pas sur toute la largeur de la demi-enveloppe (9).

Enfin, on dépose à plat, au dessus de la première demi-enveloppe (9) et de la gaine tubulaire (10), une seconde demi-enveloppe (12), de même nature que la première. De la sorte, on obtient un empilement, dont les extrémités latérales sont insérées dans l'entrefer (4) ménagé au voisinage immédiat du plan de joint.

Le processus opératoire est alors le même que celui précedemment décrit, les réactifs étant injectés dans la gaine (10).

Un exemple de réalisation particulier concerne la fabrication d'un ski de structure moulée complexe représentée sur les figures 5 et 6. On pose sur le fond (5) de l'empreinte inférieure (1) du moule un premier élément (6) correspondant à la semelle de glisse d'un ski. Cette semelle est généralement réalisée en polyéthylène ou tout autre matériau apte à favoriser la glisse du ski. On dépose alors sur les deux bords latéraux de la semelle (6) les carres (7), notamment réalisés en acier.

On dépose au dessus de la semelle un premier ensemble constituant la première demi-enveloppe, composé respectivement d'un élément de rigidification (ZICRAL) pré-encollé (8) et d'une nappe textile pré-imprégnée d'une résine époxyde (9). Cette nappe comme on peut le voir sur la figure 3, présente des prolongements latéraux (19) destinés à venir se positionner dans l'entrefer (4) défini par les empreintes inférieure (1) et supérieure (2) du moule.

On dépose alors à plat sur ce premier ensemble de rigidification une gaine tubulaire aplatie (10). Cette gaine tubulaire, réalisée par exemple en matière plastique, est étirable dans la direction correspondant au plan de sa section. Elle est apte à adhérer à la résine époxyde de pré-imprégnation de la nappe textile (9), et à la mousse de polyuréthanne dont les réactifs sont injectés lors d'une étape ultérieure à l'intérieur de ladite gaine. De manière avantageuse, cette gaine (10) est réalisée comme déjà dit en polyether blocks-amides.

Cette gaine présente la caractéristique fondamentale de ne pas être déchirable et d'être susceptible de résister à des températures au plus égales à 180°C (température au coeur du moule).

On positionne alors au dessus de la gaine (10) un second ensemble, constituant la seconde demi-enveloppe, composé dans l'ordre, d'une nappe textile de renfort (12) pré-imprégnée de résine époxyde, dont les extrémités latérales (18) viennent se positionner au dessus de celles (19) de la première nappe (9) dans l'entrefer (4) du moule, et d'un élément de rigidification ZICRAL (11) encollé.

Cette nappe textile (12) est susceptible de pouvoir glisser dans le plan de la section représentée à la figure 5 afin d'en épouser la forme.

On positionne alors au dessus de ce second ensemble de rigification (11,12) un élément thermoplastique de finition (13) encollé, notamment servant de support au décor. Cette plaque est réalisée en ABS, et est apte au collage sur l'élément de rigidification (12). Les bords latéraux (17) de l'élément thermoplastique (13) viennent également se positionner dans l'entrefer (4) du moule.

De fait, l'épaisseur de cet entrefer (4), défini par les empreintes inférieure (1) et supérieure (2) du moule est égale à la somme des épaisseurs des bords latéraux (17,18,19) respectivement de l'élément thermoplastique de décor (13), de la nappe textile de renfort supérieure (12) et de la nappe textile de renfort inférieure (9), afin de permettre lors de l'expansion des réactifs destinés à former la mousse, le glissement desdits bords latéraux vers l'intérieur de la structure.

Ces différents éléments sont empilés à plat les uns sur les autres, au contact l'un de l'autre. Pour ce faire, avant leur positionnement dans le moule, ils ont subi une pré-découpe aux bonnes dimensions, leurs surfaces sont aptes au collage, les fibres des nappes textiles (9) et (12) ont subi comme déjà dit préalablement une pré-imprégnation avec de la résine époxyde à polymérisation rapide, et l'élément supérieur (13) réalisé en thermoplastique transparent est pré-décoré, le décor étant visible par transparence du matériau.

Comme on peut le voir sur les figures 5 et 6, l'empreinte supérieure (2) du moule présente des parois latérales internes (15,16) inclinées par rapport à la verticale. De la sorte, la section du moule est trapézoïdale. Il est à noter que les deux empreintes (1,2) du moule ne sont pas hermétiques. En effet, au moins un évent est susceptible de laisser passer l'air contenu à l'intérieur du moule lors de l'injection des réactifs constitutifs de la mousse.

Lorsque l'ensemble des différents éléments est en place dans le moule, on ferme celui-ci et on injecte à l'intérieur de la gaine (10) et à proximité de l'une de ses extrémités les agents réactifs de la mousse de polyuréthane, en l'occurrence un polyol et un isocyanate qui, au contact l'un de l'autre réagissent et s'expansent in situ provoquant l'étirement de la gaine dans le plan de la section du ski, ayant pour conséquence de plaquer les éléments supérieurs de renfort (11) et (12) ainsi que l'élément supérieur de décor (13) contre les parois latérales (15,16) et supérieure (20) du moule. Corrélativement, compte tenu de ce placage, il y a légère rétraction des bords latéraux de la nappe textile de renfort (12) et de l'élément supérieur de décor (13).

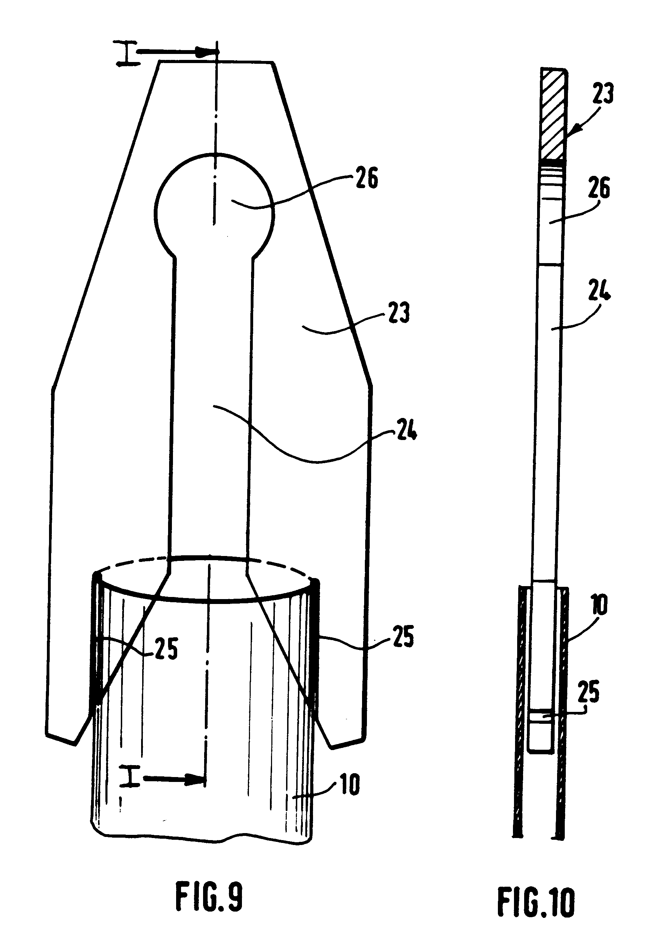

On a représenté dans les figures 9, 10, et 11 un organe apte à permettre l'injection des réactifs qui constituent après réaction, la mousse du noyau (14) à l'intérieur de la gaine (10), lorsque cette injection a lieu par le biais de la spatule. Cet organe est en fait constitué par un insert (23) de forme appropriée, et notamment effilée pour respecter le profil de la spatule. Cet insert (23), par exemple réalisé en matière plastique, présente une entaille (24) médiane, destinée à jouer le rôle de canal, lorsque l'insert est en place dans le moule. Il présente en outre deux découpes (25) sensiblement parallèles et de part et d'autre de ladite entaille (24). Ces découpes sont destinées à assurer la fixation de la gaine (10) sur l'insert (24), afin de permettre l'injection des réactifs de la mousse dans celle-ci.

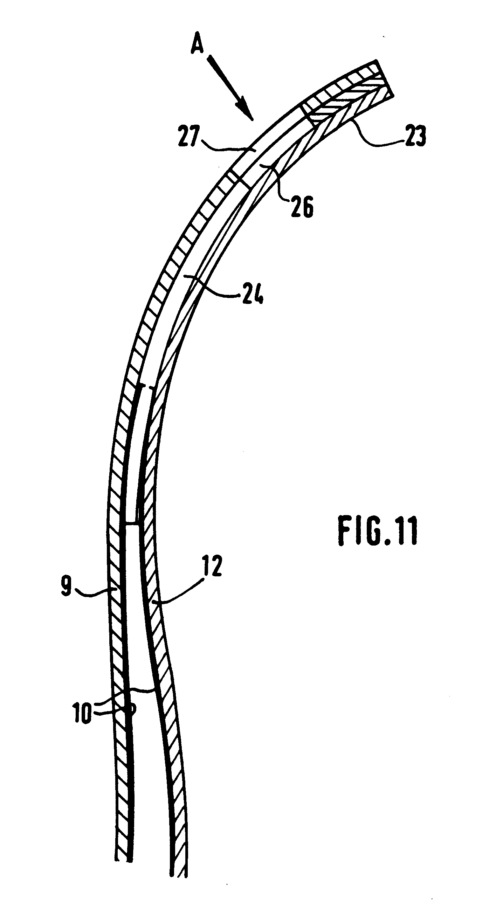

Comme on l'a représenté dans la figure 11, l'insert (23) est positionné dans le moule entre la demi-enveloppe inférieure (9) et la demi-enveloppe supérieure (12) au niveau de la spatule.Avant de positionner cette dernière, on met la gaine (10) en place dans le moule, en veillant à bien l'inserer au niveau des deux découpes (25). Lorsque le moule est refermé, l'entaille (24) de l'insert est délimitée par les deux demi-enveloppes (9,12), de sorte que l'ensemble définit un canal émergeant dans la gaine (10). L'autre extrémité de l'entaille (24) débouche au niveau d'une zone (26) en communication avec un orifice (27) traversant la demi-enveloppe inférieure (9), et donc la semelle et l'empreinte inférieure (1) du moule. L'injection des réactifs de la mousse (14) dans la gaine (10) s'effectue par cet orifice, selon la flèche A, matérialisée sur la figure 11. Cet orifice (27) est bouché par tout moyen approprié après injection.

Après refroidissement du moule puis démoulage, on obtient une structure complexe moulée de section trapézoïdale correspondant à la section du moule et présentant des barbes latérales au niveau du plan de joint. On procède alors à l'ébarbage latéral afin d'obtenir un alignement de la paroi latérale inférieure du ski sur les carres (7) et ce par tout moyen approprié.

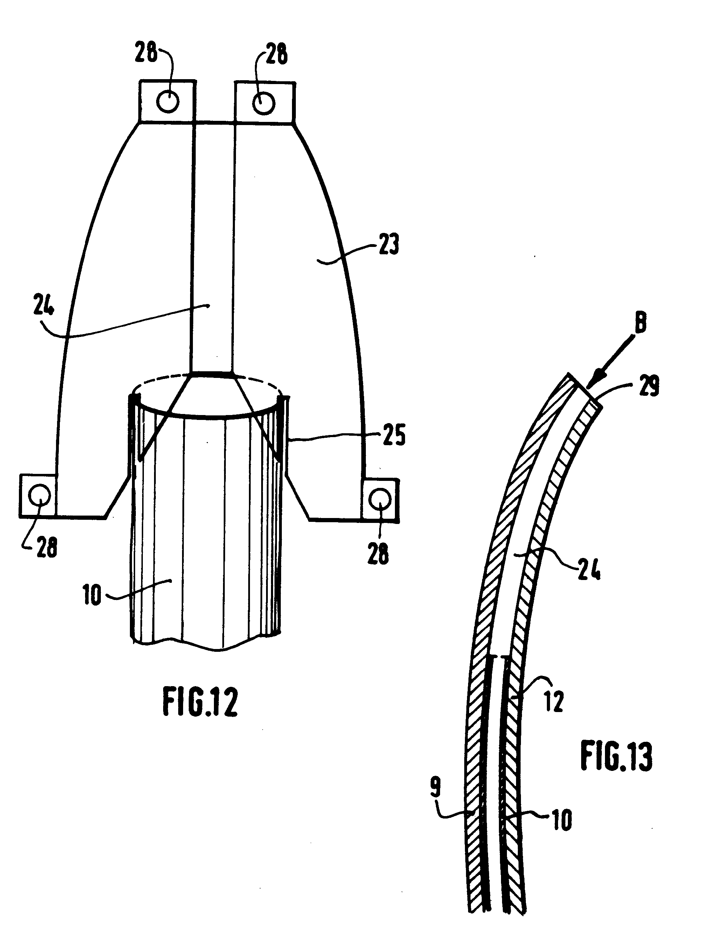

On a représenté sur les figures 12 et 13, une autre forme de réalisation de l'insert (23). Dans ce cas, l'insert (23) représenté est plus particulièrement adapté à l'injection des constituants de la mousse (14) par la section tronquée (29) de la spatule. L'insert de la figure 9 est lui-même tronqué, et est maintenu en place dans le moule au moyen de têtons de positionnement (non représentés), coopérant avec des orifices appropriés (28), solidaires de l'insert (23), et ménagés d'une part au niveau de la partie tronquée de l'insert, et d'autre part au niveau de la base de l'insert située au voisinage des découpes (25) de maintien de la gaine (10). Ces orifices (28) sont enlevés un fois le ski réalisé, par simple ébarbage. Dans ce cas particulier, l'injection s'effectue directement en bout de spatule, selon la flèche B matérialisée sur la figure 13.

Dans une variante de la forme de réalisation précédente, on peut concevoir d'injecter les réactifs de la mousse (14) par le talon du ski, l'insert (23) étant alors de forme appropriée. Le protège-talon du ski est alors rapporté après démoulage du ski.

La caractéristique essentielle de la structure ainsi obtenue à chants latéraux inclinés, réside dans le fait que la mousse de polyuréthanne constituant le noyau est séparée des éléments constitutifs des deux demi-enveloppes par une gaine élastique.

De manière avantageuse, et lorsque cela est requis, la gaine (10) peut être réalisée en un matériau étirable et également visco-élastique, apte à assurer un certain amortissement. De même, la gaine (10) peut être renforcée localement, notamment au niveau des plis, par des élément précollés. Parallèlement cette gaine (10) peut comporter des surépaisseurs locales afin de réaliser des amortissements séléctifs.

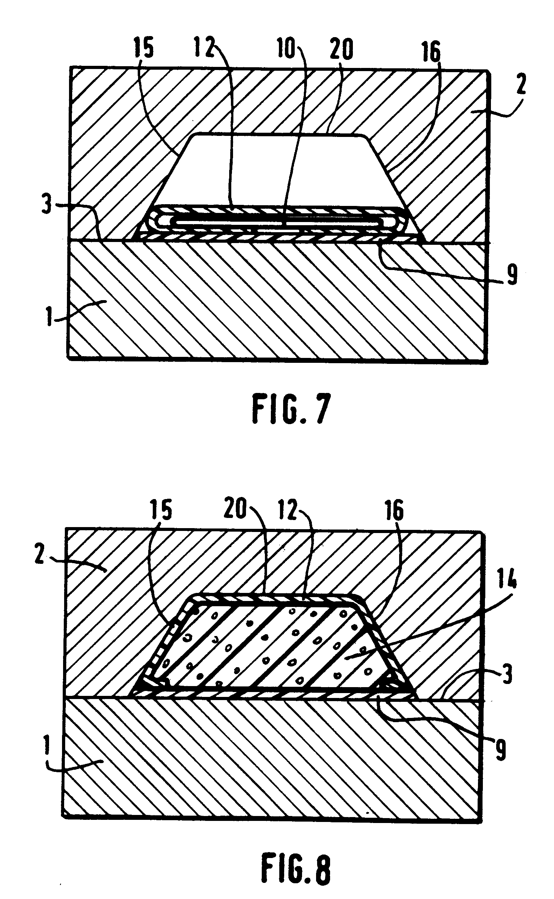

Dans une autre forme de réalisation représentée au sein des figures 7 et 8, le moule est dépourvu d'entrefer latéral. Les extrémités de la nappe textile de renfort supérieure (12) sont repliées de manière sous-jacente, lors de la mise en place des différents éléments dans le moule. De la sorte, lorsqu'il y a expansion de la mousse de polyuréthanne, il y a simultanément dépliage puis placage de la nappe textile de renfort (12) contre la paroi supérieure (20), et contre les parois latérales (15,16) du moule. La structure obtenue après démoulage est de fait directement utilisable, sans avoir recours à un quelconque ébarbage.

Parmi les avantages procurés par ce procédé, on peut citer une simplicité de mise en oeuvre compte tenu de l'empilement des différents composants à plat avant fermeture du moule.

De plus, un tel procédé permet d'obtenir des structures moulées de sections évolutives et complexes, notamment des skis, des planches à voiles, etc.

Ce procédé présente surtout l'avantage fondamental de permettre l'utilisation de résines différentes, éventuellement incompatibles entre elles, résultat qui était jusqu'à ce jour interdit compte tenu des procédés de fabrication. Ce résultat est notamment inhérent au choix particulier des membranes ou gaine de l'invention, qui remplissent un triple rôle :
- tout d'abord, le rôle d'intermédiaire de placage des sous-ensembles de demi-enveloppes contre les parois du moule sous l'effet de la pression d'expansion de la mousse de polyuréthanne ;
- ensuite, le rôle d'intermédiaire de collage entre les demi-enveloppes pré-imprégnées de résine et la mousse de polyuréthanne constitutive du noyau ;
- et enfin, le rôle d'écran à la mixtion de résines incompatibles.

Bien évidemment, ce procédé ne se limite pas à l'obtention de structures moulées complexes de section trapézoïdale, mais également à de telles structures de section rectangulaire, carrée, elliptique, ovoïde, circulaire, polygonale, etc., et ce sans se départir de la portée de l'invention.

## Revendications

1. Procédé pour la fabrication d'une structure moulée complexe, constituée par un noyau de mousse en matière plastique (14), et sur sa périphérie, par un ensemble de deux demi-enveloppes, respectivement supérieure et inférieure, qui consiste :
- à déposer dans un moule (1,2) un premier sous-ensemble (8,9) destiné à former la demi-enveloppe inférieure ;
- à déposer dans ce même moule (1,2) un second sous-ensemble (11,12), destiné à former la demi-enveloppe supérieure ;
- à fermer le moule (1,2) ;
- puis, à injecter entre ces deux sous-ensembles (14) des réactifs destinés à réagir pour former une mousse qui s'expanse in situ, jusqu'à venir plaquer les deux sous-ensembles (8,9;11,12) contre les parois du moule ;
- puis, à refroidir le contenu du moule ;
- et enfin, à ouvrir le moule pour retirer la structure moulée complexe obtenue,
**caractérisé** en ce que, lors de l'empilage du premier et du second sous-ensembles dans le moule, deux membranes souples (10,10a) en matière plastique, sont intercalées entre la demi-enveloppe inférieure (9) et la demi-enveloppe supérieure (12), lesdites membranes étant susceptibles d'adhérer à la fois à la mousse expansée et aux demi-enveloppes (9;12), membranes qui, lors de la fermeture du moule, définissent une gaine (10) dans laquelle on injecte les réactifs de la mousse.

2. Procédé selon la revendication 1, caractérisé en ce que les membranes souples (10) présentent, dans les conditions de moulage, une bonne résistance à la déchirure et une bonne tenue en température (180°C), et en ce qu'elles sont réalisées en un matériau choisi dans le groupe constitué par les polyuréthannes thermoplastiques, les polyethers blocks amide et les polyethers blocks-amide modifiés nitrile.

3. Procédé selon l'une des revendications 1 et 2, caractérisé en ce que chacune des deux demi-enveloppes (9) et (12) est constituée par un empilement comportant au moins une couche de renfort (9,12), certains des éléments constitutifs de l'empilement étant imprégné d'une résine adhésive.

4. Procédé selon la revendication 3, caractérisé en ce que les demi-enveloppes (9,12) sont pré-formées partiellement ou totalement en fonction de la forme définitive qu'elles sont supposées adopter.

5. Procédé selon l'une des revendications 1 à 4, caractérisé en ce que les membranes souples (10,10a) font partie intégrante des demi-enveloppes (9,12) et sont rapportées sur celles-ci.

6. Procédé selon l'une des revendications 4 et 5, caractérisé en ce que les membranes souples (10,10a) sont étanches aux produits générés lors de l'expansion du noyau de mousse (14).

7. Procédé selon l'une des revendications 4 à 6, caractérisé en ce que les membranes souples (10,10a) sont choisies de telle sorte que le noyau de mousse (14) adhère à la paroi interne des dites membranes, et que les résines de pré-imprégnation des éléments constitutifs de l'empilement des demi-enveloppes (9) et (12) adhèrent à la paroi externe desdites membranes (10).

8. Procédé selon l'une des revendications 1 à 7, caractérisé en ce que les membranes sont de structure complexe, constituée d'au moins deux couches de matériaux différents.

9. Procédé selon l'une des revendications 1 à 8, caractérisé en ce que les deux membranes (10,10a) sont constituées par une seule gaine tubulaire, étirable au moins dans le plan de sa section.

10. Procédé selon la revendication 9, caractérisé en ce que la gaine tubulaire (10) est réalisée, après extrusion, par repliage et soudure d'un film plat, d'épaisseur constante ou variable.

11. Procédé selon la revendication 10, caractérisé en ce que le film est constitué d'une colle thermofusible.

12. Procédé selon l'une des revendications 9 à 11, caractérisé en ce que la gaine tubulaire étirable (10) est réalisée en un matériau visco-élastique, constituant ainsi un film amortissant entourant le noyau (14) de la structure moulée.

13. Procédé selon l'une des revendications 1 à 12, caactérisé en ce que l'empreinte du moule (1,2) a une section complexe qui ménage au niveau du plan de joint (3) un intervalle (4) destiné à recevoir partie (18,19) des deux demi-enveloppes (9,12), dont l'entrefer est au plus égal à la somme des épaisseurs des deux éléments (9,12) dans les conditions d'injection des réactifs, afin de permettre, lors de l'expansion de la mousse, le glissement des bords latéraux (18,19) des éléments constitutifs des demi-enveloppes dans l'entrefer (4) et, afin de permettre à ces dits éléments de venir se plaquer au fur et à mesure contre les parois du moule.

14. Procédé selon l'une des revendications 1 à 13, caractérisé en ce que la structure moulée complexe a la forme d'une poutre et en ce que l'injection des réactifs dans la gaine tubulaire étirable (10) est effectuée au voisinage de l'une des extrémités de la poutre.

15. Procédé selon l'une des revendications 1 à 14, caractérisé en ce que les extrémités latérales de la demi-enveloppe supérieure (12) sont repliées vers l'intérieur au niveau de la base des parois latérales (15,16) du moule (1,2) lors de sa mise en place sur les membranes souples (10,10a) et avant fermeture du moule, l'expansion de la mousse provoquant leur dépliage et simultanément leur placage contre les dites parois latérales (15,16) du moule (1,2).

16. Procédé pour la fabrication d'un ski moulé, constitué d'une structure moulée complexe selon l'une des revendications précédentes, caractérisé en ce qu'il consiste :
- tout d'abord, à déposer sur le fond (5) d'un moule (1,2) un premier ensemble constituant la demi-enveloppe inférieure (9), comprenant une semelle de glisse (6) dont les bords latéraux comportent les carres (7), un élément de rigidification pré-encollé, une nappe textile de renfort pré-imprégnée d'une résine thermodurcissable :
- puis, à déposer sur ce premier ensemble, une gaine tubulaire (10), en matière plastique étirable dans au moins le plan de sa section, apte à adhérer à la fois à la mousse du noyau (14) et à la résine de pré-imprégnation;
- puis, à déposer au dessus de cette gaine tubulaire étirable (10) un second ensemble constituant la demi-enveloppe supérieure (12), comprenant une nappe textile (12) pré-imprégnée d'une résine thermodurcissable, un élément de rigidification pré-encollé (11), et une plaque thermoplastique décorée transparente (13) ;
- à fermer le moule ;
- puis à injecter à l'intérieur de la gaine tubulaire (10) par l'une de ses extrémités les réactifs de la mousse (14) ;
- et enfin, de manière connue, à refroidir le contenu du moule, et à ouvrir ce moule pour retirer le ski ainsi obtenu.

17. Procédé selon la revendication 16, caractérisé en ce que l'injection des réactifs de la mousse (14) s'effectue par la spatule.

18. Procédé selon la revendication 17, caractérisé en ce que l'injection des réactifs de la mousse (14) s'effectue par la section tronquée (29) de la spatule.

19. Procédé selon l'une des revendications 17 et 18, caractérisé en ce que l'injection des réactifs de la mousse (14) à l'intérieur de la gaine (10) s'effectue par le biais d'un canal (24) s'étendant entre un orifice (27) ménagé dans la semelle au niveau de la spatule et la zone située au niveau du point d'infléchissement de la spatule par rapport au reste du ski, ledit canal (24) étant défini par un insert (23) de forme appropriée, positionné dans le moule entre les deux demi-enveloppes (9,12), et présentant des découpes (25) destinées à permettre la fixation de la gaine (10) sur l'insert (23), afin d'obtenir une injection correcte des réactifs dans celle-ci.

20. Procédé selon la revendication 16, caractérisé en ce que l'injection des réactifs de la mousse (14) s'effectue par le talon du ski.

21. Ski obtenu selon le procédé décrit dans l'une quelconque des revendications 16 à 20, dont les chants inclinés et la face supérieure sont renforcés de manière continue par le même élément textile de renfort (12), caractérisé en ce qu'il comprend entre les deux demi-enveloppes (9) et (12) une gaine tubulaire étirable (10) visco-élastique entourant le noyau (14) de mousse expansé et adhérant à ce dernier et aux deux demi-enveloppes (9) et (12).

## Patentansprüche

1. Verfahren zur Fertigung einer mehrlagigen, in einer Form hergestellten Struktur, die durch einen Schaumkern aus Kunststoffmaterial (14) und durch eine Einheit aus zwei jeweils oberen und unteren Halbschalen als ihrer Außenfläche gebildet ist, bestehend aus:
- dem Einlegen einer ersten Untereinheit (8, 9), die dazu bestimmt ist, die untere Halbschale zu bilden, in eine Form (1, 2);
- dem Einlegen einer zweiten Untereinheit (11, 12), die dazu bestimmt ist, die obere Halbschale zu bilden, in dieselbe Form (1, 2);
- dem Schließen der Form (1, 2);
- dem anschließenden Einspritzen von Reagenzien zwischen die beiden Untereinheiten (14), die zur Reaktion bestimmt sind, um einen Schaum zu bilden, der in situ expandiert, bis die beiden Untereinheiten (8, 9; 11, 12) gegen die Wandungen der Form anliegen;
- dem anschließenden Abkühlen des Inhaltes der Form;
- und schließlich dem Öffnen der Form, um die erhaltene mehrlagige, in einer Form hergestellte Struktur zu entfernen,
dadurch gekennzeichnet, daß während des Schichtens der ersten und zweiten Untereinheit in der Form zwei geschmeidige Membranen (10, 10a) aus Kunststoffmaterial zwischen der unteren Halbschale (9) und der oberen Halbschale (12) eingelegt sind, wobei diese Membranen imstande sind, zugleich an dem expandierten Schaum und an den Halbschalen (9; 12) zu haften und während des Verschlusses der Form eine Hülle (10) bilden, in der die Reagenzien des Schaums eingespritzt werden.

2. Verfahren nach Anspruch 1, dadurch gekennzeichnet, daß die geschmeidigen Membranen (10) unter den Formungsbedingungen eine große Widerstandsfähigkeit gegen Zerreißen und eine gutes Temperaturverhalten (180°) aufweisen, und daß sie aus einem Material gebildet sind, das aus der durch die thermoplastischen Polyurethane, die Polyetherblockamide und die nitrilmodifizierten Polyetherblockamide gebildeten Gruppe ausgewählt ist.

3. Verfahren nach einem der Ansprüche 1 und 2, dadurch gekennzeichnet, daß jede der Halbschalen (9) und (12) aus einem Schichtverbund besteht, der wenigstens eine Verstärkungslage (9, 12) aufweist, wobei bestimmte der aufeinanderliegenden Schichten des Schichtverbundes mit einem Klebharz getränkt sind.

4. Verfahren nach Anspruch 3, dadurch gekennzeichnet, daß die Halbschalen (9, 12) je nach der Form, die sie endgültig annehmen sollen, teilweise oder vollständig vorgeformt sind.

5. Verfahren nach einem der Ansprüche 1 bis 4, dadurch gekennzeichnet, daß die geschmeidigen Membranen (10, 10a) einen Bestandteil der Halbschalen (9, 12) bilden und auf diesen aufgebracht sind.

6. Verfahren nach einem der Ansprüche 4 und 5, dadurch gekennzeichnet, daß die geschmeidigen Membranen (10, 10a) gegenüber der während der Expansion des Schaumkernes (14) erzeugten Produkte dicht sind.

7. Verfahren nach einem der Ansprüche 4 bis 6, dadurch gekennzeichnet, daß die geschmeidigen Membranen (10, 10a) so ausgewählt sind, daß der Schaumkern (14) an der Innenseite dieser Membranen haftet, und daß die Harze, die zur Vortränkung der aufeinanderliegenden Schichten des Schichtverbundes der Halbschalen (9) und (12) verwendet wurden, an der Außenseite dieser Membran (10) haften.

8. Verfahren nach einem der Ansprüche 1 bis 7, dadurch gekennzeichnet, daß die Membranen über eine Schichtstruktur verfügen, die wenigstens zwei Lagen aus verschiedenen Materialien aufweist.

9. Verfahren nach einem der Ansprüche 1 bis 8, dadurch gekennzeichnet, daß die beiden Membranen (10, 10a) aus einer einzigen, röhrenartigen, wenigstens in ihrer Querschnittsebene dehnbaren Hülle gebildet sind.

10. Verfahren nach Anspruch 9, dadurch gekennzeichnet, daß die röhrenartige Hülle (10) nach Extrudieren durch Falten und Verschweißen einer ebenen, dünnen Schicht mit gleicher oder variabler Dicke hergestellt ist.

11. Verfahren nach Anspruch 10, dadurch gekennzeichnet, daß die Schicht durch einen thermisch schmelzbaren Klebstoff gebildet ist.

12. Verfahren nach einem der Ansprüche 9 bis 11, dadurch gekennzeichnet, daß die dehnbare, röhrenartige Hülle (10) aus einem viskoelastischen Material besteht, das auf diese Weise eine den Kern (14) umhüllende, dämpfende Schicht der in einer Form hergestellten Struktur bildet.

13. Verfahren nach einem der Ansprüche 1 bis 12, dadurch gekennzeichnet, daß die Schale der Form (1, 2) einen komplexen Abschnitt hat, in dem in der Berührungsebene (3) ein zur Aufnahme von Teilen (18, 19) der zwei Halbschalen (9, 12) bestimmter Zwischenraum (4) vorgesehen ist, dessen Luftspalt höchstens gleich der Summe der Dicken der zwei Schichten (9, 12) unter den Umständen der Einspritzung der Reagenzien ist, um während der Ausdehnung des Schaumes das Gleiten der seitlichen Ränder (18, 19) der aufeinanderliegenden Schichten der Halbschalen in dem Luftspalt (4) und im entsprechenden Maß den besagten Schichten das Belegen der Wandungen der Form zu gestatten.

14. Verfahren nach einem der Ansprüche 1 bis 13, dadurch gekennzeichnet, daß die mehrteilige, in einer Form hergestellte Struktur die Form eines Balkens hat und daß das Einspritzen der Reagenzien in die dehnbare, röhrenartige Hülle (10) im Bereich eines der beiden Enden des Balkens geschieht.

15. Verfahren nach einem der Ansprüche 1 bis 14, dadurch gekennzeichnet, daß die längsseitige Begrenzung der oberen Halbschale (12) in der Höhe des Fußes der seitlichen Wandungen (15, 16) der Form (1, 2) während des Auflegens auf die geschmeidigen Membranen (10, 10a) und vor dem Schließen der Form in das Innere gefaltet wird, so daß die Expansion des Schaumes deren Entfalten und gleichzeitiges Anliegen gegen die seitlichen Wandungen (15, 16) der Form (1, 2) hervorruft.

16. Verfahren zur Fertigung eines in einer Form hergestellten Skis, bestehend aus einer mehrteiligen, in einer Form hergestellten Struktur gemäß einem der vorangehenden Ansprüche, dadurch gekennzeichnet, daß es aufweist:
- zuerst ein Einlegen einer ersten Einheit, die die untere Halbschale (9) bildet und eine Gleitfläche (6), deren seitliche Ränder die Kanten (7) aufnehmen, ein vorgeleimtes Versteifungselement und eine mit einem thermisch härtbaren Harz vorgetränkte Verstärkungstextilschicht aufweist, auf den Boden (5) einer Form (1, 2);
- darauf ein Auflegen einer röhrenartigen Hülle (10) aus einem wenigstens in ihrer Querschnittsebene dehnbaren Kunststoffmaterial, die dazu geeignet ist, zugleich an dem Schaumkern (14) und an dem Harz der Vortränkung zu haften, auf die erste Einheit;
- dann ein Auflegen einer zweiten Einheit, die die obere Halbschale (12) bildet und eine mit einem thermisch härtbaren Harz vorgetränkte Verstärkungstextilschicht (12), eine vorgeleimtes Versteifungselement (11) und eine transparente, verzierte, thermoplastische Platte (13) aufweist, über diese röhrenartige Hülle (10);
- das Schließen der Form;
- dann das Einspritzen der Reagenzien des Schaumes (14) in das Innere der röhrenartigen Hülle (10) durch eine ihrer Enden;
- und schließlich in bekannter Weise das Abkühlen des Inhaltes der Form und dem Öffnen dieser Form zum Entnehmen des somit erhaltenen Skis.

17. Verfahren nach Anspruch 16, dadurch gekennzeichnet, daß das Einspritzen der Reagenzien des Schaumes (14) über die Schaufel erfolgt.

18. Verfahren nach Anspruch 17, dadurch gekennzeichnet, daß das Einspritzen der Reagenzien des Schaumes (14) über den gekürzten Abschnitt (29) der Schaufel erfolgt.

19. Verfahren nach einem der Ansprüche 17 und 18, dadurch gekennzeichnet, daß das Einspritzen der Reagenzien des Schaumes (14) in das Innere der Hülle (10) durch die Schräge eines Kanales (24) erfolgt, der sich zwischen einer in dem Belag in der Höhe der Schaufel vorgesehenen Öffnung (27) und der Zone im Bereich der Schaufeldurchbiegung im Vergleich zum übrigen Ski erstreckt, wobei dieser Kanal (24) durch eine Einfügung (23) geeigneter Gestalt, die innerhalb der Form zwischen den zwei Halbschalen (9, 12) angeordnet ist, festgelegt ist, und Aussparungen (25) aufweist, die zum Befestigen der Hülle (10) an der Einfügung (23) vorgesehen sind, um in diese eine richtige Einspritzung der Reagenzien zu erhalten.

20. Verfahren nach Anspruch 16, dadurch gekennzeichnet, daß das Einspritzen der Reagenzien der Schaumes (14) über das Ende des Skis erfolgt.

21. Nach einem der in den Ansprüchen 16 bis 20 beschriebenen Verfahren erhaltener Ski, dessen geneigte Seitenflächen und obere Fläche durch das gleiche Verstärkungstextilelement (12) in kontinuierlicher Weise verstärkt sind, dadurch gekennzeichnet, daß er zwischen den beiden Halbschalen (9) und (12) eine röhrenartige, dehnbare, viskoelastische Hülle (10) aufweist, die den expandierten Schaumkern (14) umgibt und an diesem und den zwei Halbschalen (9) und (12) haftet.

## Claims

1. A process for the manufacture of a composite molded structure consisting of a plastic foam core (14) and, on its periphery, of a set of two half-casings, an upper one and a lower one respectively, which consists :
- in depositing in a mold (1, 2) a first subassembly (8; 9) intended to form the lower half-casing ;
- in depositing in this same mold (1, 2) a second subassembly (11, 12) intended to form the upper half-casing ;
- in closing the mold (1, 2) ;
- then, in injecting between these two subassemblies (14) reactants intended to react to form a foam which expands in situ, until the two subassemblies (8, 9; 11, 12) are laid flat against the walls of the mold ;
- then, in cooling the contents of the mold ;
- and finally, in opening the mold to withdraw the composite molded structure obtained,
in which process, when the first and second subassemblies are stacked in the mold, two flexible plastic membranes (10, 10a) are inserted between the lower half-casing (9) and the upper half-casing (12) said membranes being capable of adhering both to the expanded foam and to the half-casings (9;12), which membranes define, when the mold is closed, a sheath (10) into which the reactants of the foam are injected.

2. The process as claimed in claim 1, wherein, under the molding conditions, the flexible membranes (10) exhibit a good tear strength and a good temperature behavior (180°C), and are made of a material chosen from the group consisting of thermoplastic polyurethanes, amide-block polyethers and nitrile-modified amide-block polyethers.

3. The process as claimed in either of claims 1 and 2, wherein each of the two half-casings (9) and (12) consists of a stacking comprising at least one strengthening layer (9, 12), some of the constituent of the stacking being impregnated with an adhesive resin.

4. The process as claimed in claim 3, wherein the half-casings (9, 12) are partially or wholly preformed, depending on the definitive shape which they are assumed to adopt.

5. The process as claimed in one of claims 1 to 4, wherein the flexible membranes (10, 10a) form an integral part of the half-casings (9, 12) and are added onto the latter.

6. The process as claimed in either of claims 4 and 5, wherein the flexible membranes are impervious to the products generated during the expansion of the foam core (14).

7. The process as claimed in one of claims 4 to 6, wherein the flexible membranes (10, 10a) are chosen so that the foam core (14) adheres to the inner wall of said membranes and that the resins preimpregnating the members constituting the stacking of the half-casings (9) and (12) adhere to the outer wall of said membranes (10).

8. The process as claimed in one of claims 1 to 7, wherein the membranes are of composite structure consisting of at least two layers of different materials.

9. The process as claimed in one of claims 1 to 8, wherein the two membranes (10, 10a) consist of a single tubular sheath capable of being stretched at least in the plane of its section.

10. The process as claimed in claim 9, wherein the tubular sheath (10) is produced, after extrusion, by folding back and welding a flat film of uniform or variable thickness.

11. The process as claimed in claim 10, wherein the film consists of a hot-melt adhesive.

12. The process as claimed in one of claims 9 to 11, wherein the stretchable tubular sheath (10) is made of a visco-elastic material, thus forming a damping film surrounding the core (14) of the molded structure.

13. The process as claimed in one of claims 1 to 12, wherein the mold cavity (1, 2) has a complex section which produces at the plane of the joint (3) a gap (4) intended to receive part (18, 19) of the two half-casings (9, 12), whose distance is not greater than the sum of the thicknesses of the two members (9, 12) under the conditions of injection of the reactants, in order to permit, when the foam expands, the sliding of the side edges (18, 19) of the members constituting the half-casings into the gap (4) and in order to allow these said members to lie flat against the walls of the mold in step with the process.

14. The process as claimed in one of claims 1 to 13, wherein the composite molded structure is in the form of a girder and wherein the injection of the reactants into the stretchable tubular sheath (10) is performed in the vicinity of one of the ends of the beam.

15. The process as claimed in one of claims 1 to 14, wherein the side ends of the upper half-casing (12) are folded inwards at the base of the side walls (15, 16) of the mold (1, 2) when it is placed in position on the supple membranes (10, 10a) and before the mold is closed, the expansion of the foam causing them to unfold and simultaneously to be laid flat against the said side walls (15, 16) of the mold (1, 2).

16. A process for the manufacture of a molded ski consisting of a composite molded structure as claimed in one of the preceding claims, which consists :
- first of all, in depositing on the bottom (5) of a mold (1, 2) a first set constituting the lower half-casing (9), comprising a runner (6) whose side edges comprise the ski edges (7), a stiffening member precoated with adhesive, and a textile strengthening sheet preimpregnated with a heat-curable resin;
- then, in depositing on this first set a tubular sheath (10) of plastic capable of being stretched at least in the plane of its section, capable of adhering both to the foam of the core (14) and to the preimpregnating resin ;
- then, in depositing above this stretchable tubular sheath (10) a second set constituting the upper half-casing (12), comprising a textile sheet (12) preimpregnated with a heat-curable resin, a stiffening member precoated with adhesive (11) and a transparent decorated thermoplastic plate (13) ;
- in closing the mold ;
- then in injecting the reactants of the foam (14) into the tubular sheath (10) through one of its ends ;
- and, finally, in a known manner, in cooling the contents of the mold and in opening this mold to withdraw the ski thus obtained.

17. The process as claimed in claim 16, wherein the injection of the reactants of the foam (14) takes place via the ski tip.

18. The process as claimed in claim 17, wherein the injection of the reactants of the foam (14) takes place via the truncated section (29) of the ski tip.

19. The process as claimed in either of claims 17 and 18, wherein the injection of the reactants of the foam (14) into the sheath (10) takes place by means of a channel (24) extending between an orifice (27) arranged in the runner at the ski tip and the region situated at the point of inflection of the ski tip in relation to the remainder of the ski, said channel (24) being defined by a suitably shaped insert (23) positioned in the mold between the two half-casings (9, 12) and having cutouts (25) intended to permit the fastening of the sheath (10) to the insert (23) in order to obtain a correct injection of the reactants into said sheath.

20. The process as claimed in claim 16, wherein the injection of the reactants of the foam (14) takes place via the heel of the ski.

21. A ski obtained according to the process described in any one of claims 16 to 20, wherein the inclined sides and the upper face are strengthened continuously by the same textile reinforcement member (12), said ski comprising, between the two half-casings (9) and (12) a viscoelastic stretchable tubular sheath (10) surrounding the expanded foam core (14) and adhering to the latter and to the two half-casings (9) and (12).
